# EUROPÄISCHE PATENTSCHRIFT

(11) **EP 4 234 824 B1**
(45) Veröffentlichungstag und Bekanntmachung des Hinweises auf die Patenterteilung: **19.02.2025**
(21) Anmeldenummer: 23158364.2
(22) Anmeldetag: 23.02.2023
(51) Int. Cl.: E03D 11/10, F16K 15/14, F16K 15/04, E03D 5/012, E03C 1/298, E03D 5/014, E03D 11/11

(54) **RÜCKSCHLAGVENTIL MIT ENTLÜFTUNGSEINRICHTUNG**
CHECK VALVE WITH VENTING DEVICE
CLAPET ANTI-RETOUR AVEC DISPOSITIF DE PURGE

(30) Priorität: 25.02.2022 DE 102022201998; 03.03.2022 DE 102022202198
(43) Veröffentlichungstag der Anmeldung: 30.08.2023
(73) Patentinhaber: TROBOLO Europe Sp. z o.o., 61-806 Poznan (PL)
(72) Erfinder: Lange, Friedrich, Niepruszewo (PL)
(74) Vertreter: Taruttis, Stefan Georg

(56) Entgegenhaltungen:
- EP-A2- 1 531 070
- WO-A1-2016/123331
- WO-A1-2019/200319
- US-A1- 2017 121 953
- US-A1- 2017 122 445

## Beschreibung

Die vorliegende Erfindung betrifft ein Rückschlagventil, das für die Verwendung in einer mobilen oder stationären Toilette z.B. als Geruchsverschluss geeignet ist, sowie eine Toilette mit dem Rückschlagventil. Das Rückschlagventil zeichnet sich dadurch aus, dass es von einfacher Bauweise ist und einen Rückfluss von Flüssigkeit sowie den Austritt von Gerüchen effektiv verhindert. Das Rückschlagventil zeichnet sich durch eine integrierte Entlüftungseinrichtung aus, die vorzugsweise geräuscharm ist und einen Fluss von Flüssigkeit in Sperrrichtung des Rückschlagventils nicht zulässt.

Bevorzugt ist das erfindungsgemäße Rückschlagventil so angeordnet, dass Flüssigkeit von einem Toilettenbecken durch das Rückschlagventil in einen Auffangbehälter fließen kann, wobei das Rückschlagventil den Übergang flüssigkeitsdicht und bevorzugt geruchsdicht abdichtet.

Es ist bekannt, für einen Rückschlagschutz von Flüssigkeiten Rückschlagventile mit eingebauten Kegeln zu verwenden. Diese haben den Nachteil, dass eine separate Entlüftungseinrichtung verbaut werden muss, da sonst ein dem Rückschlagventil nachgeordneter Auffangbehälter mit konstantem Volumen einen Überdruck aufbaut, der einen weiteren Zulauf von Flüssigkeit erschwert.

Bekannte Rückschlagventile sind in US2017122445A1, WO2016123331A1 und US2017121953A1 offenbart.

Insbesondere offenbart US2017122445A1 ein Ablassventil, welches ein Gehäuse aufweist, das eine Abflussleitung für den Durchgang von abzulassenden Flüssigkeiten definiert, wobei die Abflussleitung einen ersten Rand aufweist, der einen Einlass zur Abflussleitung definiert, gegenüber einem zweiten Rand, der einen Auslass aus der Abflussleitung definiert. Ein oder mehrere Rückschlagventile befinden sich innerhalb der Abflussleitung zwischen dem ersten Rand und dem zweiten Rand und haben eine geschlossene Konfiguration und eine offene Konfiguration, die dafür ausgelegt sind, den Fluss von Flüssigkeiten durch den Auslass der Abflussleitung zu ermöglichen. Eine Entlüftungsleitung erstreckt sich innerhalb der Abflussleitung und umfasst im Inneren einen unteren Ventilsitz, einen oberen Ventilsitz und ein Bypassventil, das zwischen dem unteren Ventilsitz und dem oberen Ventilsitz positioniert ist. Das Bypass-Ventil ist dafür ausgelegt, dass Gas das eine oder die mehreren Rückschlagventile umgehen und in die Atmosphäre entweichen kann, wenn das Gas einen vorgegebenen Druck erreicht. Es wird dadurch nicht offenbart, dass ein Gerüst im Bereich eines Dichtungssitzes Durchbrechungen aufweist und dass ein Schließelement einstückig mit einer Entlüftungseinrichtung ausgebildet ist.

### Aufgabe der Erfindung

Der Erfindung stellt sich die Aufgabe, ein alternatives Rückschlagventil mit integrierter Entlüftung bereitzustellen, das ein Einfüllen von Flüssigkeit in einen nachgeordneten Behälter mit konstantem Volumen erlaubt und eine effektive Rückschlagwirkung hat, und das bevorzugt das Hindurchdringen von Gerüchen reduziert.

### Beschreibung der Erfindung

Die Erfindung löst die Aufgabe mit den Merkmalen der Ansprüche und stellt insbesondere ein Rückschlagventil und eine damit versehene Toilette bereit, das zwischen einem Einlassende und einem gegenüberliegenden Auslassende entlang einer gemeinsamen Längsachse nacheinander, z.B. in dieser Reihenfolge,
- optional einen zwischen dem Einlassende und einem Dichtungssitz angeordneten Adapter,
- einen von einem starren Gerüst gebildeten Dichtungssitz,
- ein von einem elastischen Verschlussteil gebildetes Schließelement,
- optional einen mit dem Gerüst verrastbaren Anschlag mit Verschlussstück, das zwischen dem Anschlag und dem Verschlussteil angeordnet und zwischen diesen beweglich ist, aufweist oder daraus besteht, wobei das Gerüst und das Verschlussteil im Bereich des Dichtungssitzes zueinander passend geformt sind, bevorzugt trichterförmig in Richtung auf das Einlassende zulaufend ausgebildet, und das Verschlussteil durch seine Elastitizität in einer Normalstellung des Rückschlagventils im Bereich des Dichtungssitzes gegen das Gerüst gespannt und gegen das Gerüst anliegt und in diesem gehaltert ist, wobei das Gerüst im Bereich des Dichtungssitzes Durchbrechungen aufweist und das Schließelement einstückig mit einer Entlüftungseinrichtung ausgebildet ist. Generell ist das Schließelement eingerichtet, dass es bei in Durchlassrichtung anliegendem Druck von dem Dichtungssitz wegklappt, sodass das Rückschlagventil öffnet, und bei in Sperrrichtung anliegendem Druck und in Normal- bzw. Ruhestellung an dem Gerüst anliegt, sodass das Rückschlagventil schließt. Das optionale Verschlussstück ist eingerichtet, dass es bei in Durchlassrichtung anliegendem Druck in einer Offenstellung am Anschlag anliegt, sodass das Rückschlagventil für Flüssigkeit und Luft durchlässig ist, und es bei in Sperrrichtung anliegendem Druck in einer Schließstellung am Verschlussteil anliegt, sodass das Rückschlagventil schließt. Generell können das Gerüst und das Verschlussteil im Bereich des Dichtungssitzes zueinander passend in einer Ebene, z.B. als Teller, oder trichterförmig zulaufend geformt sein, jeweils mit zumindest dreieckigem Querschnitt, z.B. einem bis zu achteckigem oder bis zu sechseckigen Querschnitt, bevorzugt ovalen oder kreisförmigem Querschnitt.

Insbesondere ist das Rückschlagventil für die Verwendung in einer Trenntoilette geeignet, insbesondere zur Anordnung in dem für flüssige Ausscheidungen vorgesehenen Strömungsweg, der von einem Trenneinsatz gebildet wird. Unter einer Trenntoilette wird eine Toilette verstanden, die flüssige und feste Ausscheidungen in getrennte Behälter abführt, z.B. mittels eines Siebs und/oder Trenneinsatzes mit zwei an einer größeren Öffnung, z.B. von einem Toilettenbecken gebildet, angrenzenden Strömungswegen, die voneinander getrennt verlaufen.

Generell wird das Rückschlagventil an seinem Einlassende von z.B. einem Schlauch oder einem Becken kontaktiert, bevorzugt von einem Toilettenbecken, und wird an seinem Auslassende von z.B. einem geschlossenen Behälter, einem Flansch oder einem Schlauch kontaktiert, bevorzugt von einem Auffangbehälter. Dabei ist die Richtung von dem Einlassende in Richtung auf das Auslassende die Durchflussrichtung und die entgegengesetzte Richtung, d.h. vom Auslassende in Richtung auf das Einlassende, die Sperrrichtung des Rückschlagventils. Eine Normalstellung des Rückschlagventils wird dadurch definiert, dass das Einlassende oberhalb des Auslassendes angeordnet ist, sodass die Schwer- bzw. Gewichtskräfte in Richtung auf das Auslassende wirken. In einer Überkopfstellung ist das Auslassende oberhalb des Einlassendes angeordnet, wodurch die Schwer- bzw. Gewichtskräfte in umgekehrter Richtung wirken, d.h. in Richtung auf das Einlassende. In Ruhestellung des Rückschlagventils wirken im Wesentlichen keine Kräfte bzw. Drücke von Flüssigkeiten oder Gasen vom Einlassende auf das Rückschlagventil.

Generell weisen der optionale Adapter, das Gerüst, das Verschlussteil, das optionale Verschlussstück und der optionale Anschlag des Rückschlagventils alle einen im Wesentlichen kreisförmigen Querschnitt auf bzw. sind im Wesentlichen rotationssymmetrisch ausgebildet. Dadurch hat das Rückschlagventil den Vorteil, dass es einfach zusammenbaubar ist und leichte Abweichungen in der Ausrichtung von Einlass- und Auslassende toleriert, ohne undicht zu werden.

Das Gerüst des Rückschlagventils ist bevorzugt einstückig ausgebildet und wirkt in einem inneren Abschnitt seines Querschnitts als Dichtungssitz des Rückschlagventils und optional in einem äußeren Abschnitt seines Querschnitts als Verschluss gegenüber z.B. einem an das Auslassende des Rückschlagventils angeschlossenen Behälter oder Schlauch. Das Gerüst ist aus einem biegesteifen bzw. starren Material, z.B. Hartplastik, z.B. Polypropylen. Das Gerüst ist mit einer ersten Seite in Richtung auf das Einlassende und mit einer zweiten Seite in Richtung auf das Auslassende angeordnet, wobei der Abstand zwischen erster und zweiter Seite entlang der Oberflächennormalen auch als Dicke des Gerüsts bezeichnet wird.

Im inneren Abschnitt seines Querschnitts ist das Gerüst als Trichter geformt, der in Richtung auf das Einlassende zuläuft und die Dichtfläche des Rückschlagventils bildet. Im Zentrum seines Querschnitts weist das Gerüst eine Öffnung auf.

In der Wand seines inneren Abschnitts bzw. in der Dichtfläche weist das Gerüst Durchbrechungen auf, die bevorzugt jeweils mit einem ersten Ende in Richtung auf die Öffnung und mit einem gegenüberliegenden zweiten Ende in Richtung auf den äußeren Abschnitt des Gerüsts, z.B. des Trichters, angeordnet sind, wobei die Durchbrechungen bevorzugt jeweils in Richtung auf die Öffnung zulaufen und in den Zwischenräumen jeweils Streben verlaufen. Z.B. können zumindest 3 Durchbrechungen in dem Gerüst angeordnet sein, zwischen denen zumindest 3 Streben verlaufen.

Im äußeren Abschnitt seines Querschnitts ist das Gerüst optional als Verschluss ausgeformt, z.B. als Überwurfmutter oder Deckel, bevorzugt mit innenliegendem Schraubgewinde. Dadurch ist das Rückschlagventil eingerichtet, dass es in Richtung auf das Auslassende abgesehen von den Durchbrechungen in der Dichtfläche und der Öffnung dicht verschließt, sodass keine Luft bzw. Flüssigkeit im Bereich des äußeren Abschnitts des Rückschlagventils aus z.B. einem Behälter, z.B. einem Urintank entweichen kann.

Vorzugsweise weist das Gerüst im Bereich der Durchbrechungen an der ersten Seite des Gerüsts Anlagestege auf, die eingerichtet sind, von dem optionalen Adapter bzw. von z.B. einem Trenneinsatz einer Trenntoilette flüssigkeitsdicht kontaktiert zu werden. Dabei erstrecken sich die Anlagestege in dem Bereich angrenzend an das zweite Ende der Durchbrechungen und vorzugsweise nur über einen Anteil der Dicke des Gerüsts, bevorzugt nicht über die erste Seite des Gerüsts hinaus. Ein Gerüst mit Anlagestegen hat den Vorteil, dass es gegenüber z.B. dem optionalen Adapter eine höhere Dichtwirkung aufweist als ein Gerüst ohne Anlagestege. Außerdem wird dadurch, dass sich die Anlagestege wie bevorzugt nicht über die gesamte Dicke des Gerüsts erstrecken, die Oberfläche der Durchbrechungen an der zweiten Seite des Gerüsts vorteilhaft vergrößert, sodass das Rückschlagventil bereits bei geringerem Flüssigkeitsdruck öffnet als ein Rückschlagventil mit Anlagestegen, die sich über die gesamte Dicke des Gerüsts erstrecken.

An seiner der ersten gegenüberliegenden zweiten Seite bzw. in Richtung auf das Auslassende wird das Gerüst von einem Verschlussteil kontaktiert, das dadurch als Schließelement bzw. Dichtelement bzw. Ventilklappe wirkt, dass es in einem Trichterabschnitt passend, z.B. trichterförmig passend, zu dem Gerüst ausgebildet ist, sodass es in Ruhestellung das Gerüst in dessen innerem Abschnitt bevorzugt vollflächig kontaktiert und vorzugsweise gegen das Gerüst gespannt ist, optional nicht gegen das Gerüst belastet wird, z.B. nicht zusätzlich federbelastet wird. Die Trichteröffnung des Verschlussteils in einem Trichterabschnitt weist bevorzugt einen Öffnungswinkel auf, der dem Öffnungswinkel des Gerüsts in dessen innerem Abschnitt entspricht, insbesondere einen Öffnungswinkel von zumindest 20°, bevorzugt zumindest 30°, zumindest 40°, zumindest 50°, zumindest 60° oder zumindest 70° bis zu 120°, bevorzugt bis zu 110°, bis zu 100°, bis zu 90° oder bis zu 80°, bevorzugter bis < 90°.

Das Verschlussteil ist generell aus einem weicheren Material als das Gerüst bzw. elastisch, z.B. aus Gummi, Silikon oder thermoplastischem Polyurethan (TPU) und ist eingerichtet, dass es bei in Durchflussrichtung anliegendem Druck von dem Gerüst wegklappt, sodass das Rückschlagventil öffnet und dadurch in Durchlassrichtung durchlässig ist, und bei in Sperrrichtung anliegendem Druck bzw. in Ruhestellung durch seine Elastizität an dem Gerüst anliegt, sodass das Rückschlagventil schließt und dadurch in Sperrrichtung undurchlässig ist.

Generell ist das Schließelement einstückig mit einer Entlüftungseinrichtung ausgebildet. Z.B. kann dazu das Verschlussteil in einem Abschnitt eine Öffnung aufweisen, die zum Abbauen eines Überdrucks in Sperrrichtung des Rückschlagventils eingerichtet ist. Die Entlüftungseinrichtung kann ein z.B. eine Öffnung, optional endständig, insbesondere ein endständiger Schlitz im elastischen Material des Verschlussteils sein.

In der bevorzugten Ausführungsform ragt das Verschlussteil an einem ersten Ende mit einem an den Trichterabschnitt anschließenden Entlüftungsabschnitt abschnittsweise durch die Öffnung des Gerüsts und weist in Richtung auf das Einlassende in einem Abstand von dem Gerüst einen z.B. endständigen Durchlass auf, der eingerichtet ist, eine Öffnung in dem Verschlussteil zu bilden. Dabei ist der Entlüftungsabschnitt vorzugsweise über seine gesamte Länge ausgehöhlt und bildet insbesondere eine Leitung, sodass Gas bei in Sperrrichtung des Rückschlagventils anliegendem Druck vom Auslassende durch den Entlüftungsabschnitt zum Einlassende des Rückschlagventils strömen kann. Bevorzugt ist die Sperr- bzw. Durchflussrichtung des Durchlasses jeweils umgekehrt zur Sperr- bzw. Durchflussrichtung des Rückschlagventils. Dabei ist bevorzugt, dass der Durchlass in seiner Durchflussrichtung durchlässig für Gas ist und undurchlässig für Flüssigkeit ist.

Optional ist der Durchlass von einem Rückschlagverschluss gebildet, z.B. einer Lippe. Dadurch ist der Durchlass bevorzugt in Ruhestellung undurchlässig für Gas, insbesondere für Gerüche.

Zwischen dem Trichterabschnitt und dem Entlüftungsabschnitt des Verschlussteils kann ein Sieb bzw. ein Filter angeordnet sein, wobei bevorzugt der Übergang zwischen Trichterabschnitt und Entlüftungsabschnitt offen ist. Denn es hat sich gezeigt, dass das Rückschlagventil auch mit offenem Übergang zwischen Trichterabschnitt und Entlüftungsabschnitt in Sperrrichtung gut abdichtet und keine Flüssigkeit durch den Durchlass des Verschlussteils dringt.

Optional bevorzugt ist das Verschlussteil eingerichtet, dass es bereits bei einem anliegenden Druck von dem Gerüst weg klappt bzw. öffnet, der einer Füllhöhe von Flüssigkeit am Einlassende des Rückschlagventils entspricht, bei der der Entlüftungsabschnitt des Verschlussteils abschnittsweise über die Füllhöhe hinausragt, sodass bei Öffnung des Rückschlagventils der Durchlass aus der Flüssigkeit hinausragt, bzw. der Durchlass oberhalb der Flüssigkeitsoberfläche angeordnet ist. Dadurch hat das Rückschlagventil den Vorteil, dass der Druckausgleich durch den Durchlass geräuscharm, insbesondere ohne Blubbern erfolgt.

Bevorzugt kontaktiert das Verschlussteil das Gerüst nur im Bereich der Öffnung und in einem Bereich am zweiten Ende des Verschlussteils, das z.B. als Auskragung ausgebildet sein kann.

Generell ist das Schließelement an dem Dichtungssitz gehaltert. Dabei ist bevorzugt, dass der Außenquerschnitt des Verschlussteils in dem Bereich, der durch das Gerüst hindurch ragt, zumindest abschnittsweise größer ist als der Querschnitt der Öffnung im Zentrum des Gerüsts, insbesondere eine Hinterschneidung, die z.B. neben einer umlaufenden Wulst gebildet sein kann, aufweist und damit von dem Gerüst klemmend gehalten wird. Dadurch hat das Schließelement den Vorteil, dass es ausschließlich klemmend in dem Dichtungssitz gehaltert sein kann und z.B. einfach austauschbar ist.

Optional wird das Gerüst an seiner ersten Seite, die dem Einlassende des Rückschlagventils zugewandt ist, von einem Adapter kontaktiert, dessen Außenquerschnitt bevorzugt zylindrisch ist. Der Adapter ist bevorzugt elastisch, insbesondere aus einem weicheren Material als das Gerüst, z.B. aus Silikon oder TPU. Der Adapter weist ein erstes Ende und ein entlang der gemeinsamen Längsachse gegenüberliegendes zweites Ende auf, wobei der Adapter mit seinem ersten Ende angrenzend an das Einlassende des Rückschlagventils angeordnet ist und mit dem zweiten Ende angrenzend an das Gerüst angeordnet ist. Der Adapter dichtet zwischen dem Einlassende und dem Dichtungssitz ab, d.h. auf der dem Schließelement gegenüberliegenden Seite des Dichtungssitzes.

In einer Ausführungsform kann das erste Ende des Adapters angrenzend an z.B. einen Trenneinsatz einer Trenntoilette angeordnet sein bzw. diesen abschnittsweise umschließen, und kann das zweite Ende des Adapters die erste Seite des Gerüsts kontaktieren. Dadurch wirkt der Adapter als Dichtung zwischen dem Einlassende und dem Dichtungssitz des Rückschlagventils. Dabei ist generell bevorzugt der Adapter nicht fest mit dem Gerüst verbunden, sondern lediglich an die erste Seite des Gerüsts angedrückt.

Der Adapter weist bevorzugt ausgehend von seinem ersten Ende einen ersten Abschnitt mit größerem Innenquerschnitt auf und angrenzend daran einen zweiten Abschnitt mit geringerem Innenquerschnitt, wobei zwischen dem ersten und dem zweiten Abschnitt eine umlaufende Auflagefläche angeordnet ist, die bevorzugt parallel zum Querschnitt des Adapters bzw. quer oder im rechten Winkel zur gemeinsamen Längsachse verläuft. Dabei ist der Adapter eingerichtet, dass er einen Einlassbehälter, z.B. ein Toilettenbecken oder z.B. einen Trenneinsatz, umfasst und mit seiner Auflagefläche kontaktiert und dadurch abdichtet.

Alternativ oder zusätzlich kann der Adapter in seinem ersten ein an seiner Innenseite geformtes Gewinde oder einen Bajonettverschluss aufweisen. Dadurch ist der Adapter eingerichtet, auf einen an seinem ersten Ende angeschlossenen Schlauch bzw. Becken aufgeschraubt zu werden, sodass diesem gegenüber eine bessere Dichtwirkung erzielt wird als mit einem Adapter mit glatter Innenseite.

Der Adapter ist generell eingerichtet, mit seinem zweiten Ende das Gerüst an dessen erster Seite flüssigkeitsdicht zu kontaktieren. Dabei kontaktiert das zweite Ende des Adapters bevorzugt die Streben des Gerüsts und optional die Anlagestege.

In seinem zweiten Abschnitt weist der Adapter bevorzugt eine umlaufende Nut auf, die den Adapter in einen äußeren Abschnitt und einen inneren Abschnitt abteilt, deren Enden gegeneinander beweglich sind. Dabei ist der Adapter ausgebildet, dass sein zweites Ende im inneren Abschnitt einen geringeren Abstand entlang der gemeinsamen Längsachse zum ersten Ende aufweist als im äußeren Abschnitt, sodass er an die trichterförmige Wand des Gerüsts angepasst ist und das Gerüst mit seinem zweiten Ende sowohl im inneren Abschnitt als auch im äußeren Abschnitt dicht kontaktiert.

Optional weist das Rückschlagventil zusätzlich zwischen dem Verschlussteil und dem Auslassende, z.B. in einem Abstand vom Gerüst, einen Anschlag auf, der generell mit dem Gerüst verrastbar ist. Zwischen Anschlag und Verschlussteil ist ein Verschlussstück angeordnet, wobei in Normalstellung des Rückschlagventils das Verschlussstück eingerichtet ist, eine Entlüftung durch die Entlüftungseinrichtung des Rückschlagventils zu erlauben und z.B. in Überkopfstellung das Verschlussstück eingerichtet ist, den Zugang zur Entlüftungseinrichtung, insbesondere den Entlüftungsabschnitt und/oder die Entlüftungseinrichtung, zusätzlich zu verschließen, sodass keine Flüssigkeit durch z.B. den Entlüftungsabschnitt in Richtung auf das Einlassende fließen kann. Dabei ist der Anschlag eingerichtet, das Verschlussstück zu halten. Der Anschlag weist dazu generell im Zentrum seines Querschnitts eine Öffnung mit einem Durchmesser auf, und das Verschlussstück hat generell einen Durchmesser, der größer als diese Öffnung und bevorzugt größer oder kleiner als der Durchmesser des Anschlags ist.

Der Anschlag ist weiter eingerichtet, mit dem Gerüst zu verrasten und in Normalstellung ein Hindurchfließen der Flüssigkeit in Durchflussrichtung zu erlauben. Dazu kann der Anschlag z.B. dadurch mit dem Gerüst verrastbar sein, dass er zumindest einen Vorsprung, z.B. zumindest oder genau 3 Vorsprünge, aufweist, die jeweils in gegenüberliegende und dazu passende Ausnehmungen in der Wand des Gerüsts verrastbar und daraus lösbar sind, sodass der Anschlag in einem Abstand von dem Gerüst um die gemeinsame Längsachse festlegbar ist. Alternativ kann z.B. das Gerüst zumindest einen Vorsprung aufweisen, der sich vorzugsweise umlaufend über den gesamten Umfang des Gerüsts erstreckt, und kann der Anschlag zumindest eine gegenüberliegende passende, vorzugsweise umlaufende Ausnehmung aufweisen. Dabei ist weiter bevorzugt, dass das Gerüst einen umlaufenden Rand aufweist, der sich von der Gerüstwand in Richtung auf das Auslassende des Rückschlagventils erstreckt und vorzugsweise am Anschlag anliegt, wenn dieser an dem Gerüst festgelegt ist.

In einer ersten Ausführungsform kann sich der Anschlag angrenzend an die Öffnung in einem trichterförmigen Abschnitt in Richtung auf das Einlassende zulaufend erstrecken. In dieser Ausführungsform kann der Anschlag in einem umlaufenden, der Öffnung gegenüberliegenden äußeren Abschnitt angrenzend an den trichterförmigen Abschnitt eben sein und bevorzugt quer zur gemeinsamen Längsachse angeordnet sein. Der Öffnungswinkel des trichterförmigen Abschnitts des Anschlags ist dann bevorzugt geringer als der Öffnungswinkel im trichterförmigen inneren Abschnitt des Gerüsts, z.B. um 10° bis 50° geringer. Der Anschlag ist aus einem biegesteifen Material, z.B. Hartplastik, insbesondere Polypropylen. In der Wand des Anschlags sind optional Durchbrechungen angeordnet, die sich in einem Abstand von der Öffnung entlang des trichterförmigen Abschnitts bis in den äußeren Abschnitt des Anschlags erstrecken und zwischen denen Streben verlaufen. Bevorzugt weist der Anschlag in dieser ersten Ausführungsform zumindest 3 Durchbrechungen auf, zwischen denen zumindest 3 Streben verlaufen.

In dieser ersten Ausführungsform mit optionalem Anschlag ist bevorzugt entlang der Längsachse eine Anschlagkugel als Verschlussstück zwischen dem Anschlag und dem Verschlussteil angeordnet. Der Kugeldurchmesser der Anschlagkugel ist dabei generell größer als der Durchmesser der Öffnung. Generell ist der Anschlag im Bereich seiner Öffnung um einen Abstand von dem Verschlussteil entfernt, der größer ist als der Anteil des Kugeldurchmessers, der bei in der Öffnung angeordneter Anschlagkugel über die Ebene der Öffnung hinausragt. Bevorzugt ist der Anschlag im Bereich um seine Öffnung abschnittsweise quer zur Durchlass- bzw. Sperrrichtung ausgebildet, sodass in einem umlaufenden Bereich um die Öffnung der Abstand zwischen Anschlag und Verschlussteil geringer ist als der Kugeldurchmesser. Die Anschlagkugel ist dabei eingerichtet, in Normalstellung des Rückschlagventils eine Entlüftung durch den Entlüftungsabschnitt des Verschlussteils zu erlauben und z.B. in Überkopfstellung den Entlüftungsabschnitt zu kontaktieren und dadurch zu verschließen, sodass keine Flüssigkeit durch den Entlüftungsabschnitt in Richtung auf das Einlassende und/oder zur Entlüftungseinrichtung fließen kann.

In einer zweiten Ausführungsform kann sich der Anschlag im Wesentlichen quer zur gemeinsamen Längsachse erstrecken und keinen trichterförmigen Bereich aufweisen. Angrenzend an die Öffnung im Zentrum seines Querschnitts kann der Anschlag dann Ausnehmungen aufweisen, die sich, vorzugsweise zinnenförmig, d.h. mit jeweils zwischenliegenden radialen Stegen, radial bis zu einer umlaufenden Außenkante des Anschlags erstrecken können. In dieser zweiten Ausführungsform kann das Verschlussstück z.B. als Kugelabschnitt oder als gebogene Platte ausgebildet sein, bevorzugt einen Durchmesser aufweisen, der größer ist als die Öffnung im Zentrum des Anschlags und der kleiner ist als der Durchmesser des Anschlags, und weiter bevorzugt zinnenförmig angeordnete Ausnehmungen an seiner umlaufenden Außenkante aufweisen. In dieser Ausführungsform ist das Verschlussstück eingerichtet, bei in Durchlassrichtung anliegendem Druck eine Entlüftung durch den Entlüftungsabschnitt des Verschlussteils zu erlauben und bei in Sperrrichtung anliegendem Druck das Verschlussteil z.B. im Bereich seiner Auskragung zu kontaktieren und dadurch zu verschließen, sodass keine Flüssigkeit durch den Entlüftungsabschnitt in Richtung auf das Einlassende fließen kann.

Bevorzugt sind Adapter, Gerüst und Verschlussteil aus Materialien, die maschinell reinigbar sind, z.B. maschinenwaschbar, insbesondere bei 65°C, ohne dauerhaft zu verformen, und weiter bevorzugt beständig gegen chlorhaltige Reinigungsmittel sind.

Optional ist im oder am Entlüftungsabschnitt ein Röhrchen angebracht, insbesondere mit seinem ersten Ende in den Entlüftungsabschnitt geklemmt ist, wobei sich das Röhrchen längs des Verschlussteils, bevorzugt auch durch und über das Gerüst hinaus erstreckt und das Röhrchen in dem Bereich oder jenseits seines Bereichs, der in der Ebene der endständigen Querschnittsöffnung des Verschlussteils gegenüber dem Entlüftungsabschnitt liegt, eine Knickstelle aufweist und an seinem dem ersten Ende gegenüberliegenden zweiten Ende jenseits der Knickstelle ein Passivelement aufweist, das ein Schwimmer oder ein Gewicht höherer Dichte als Wasser sein kann. Das Röhrchen, das mit seinem ersten Ende am Entlüftungsabschnitt angebracht ist, weist an seinem gegenüberliegenden zweiten Ende ein Passivelement auf und dazwischen eine Knickstelle, die bevorzugt in dem Bereich der Ebene der endständigen Querschnittsöffnung des Verschlussteils oder außerhalb des Verschlussteils liegt. Dabei liegt die endständige Querschnittsöffnung des Verschlussteils dem Entlüftungsabschnitt gegenüber und ist bei einem trichterförmigen Verschlussteil dessen größere endständige Querschnittsöffnung. Wenn das Passivelement ein Schwimmer ist, der eine geringere Dichte als Wasser aufweist, wird das Passivelement durch Flüssigkeit bewegt und schwenkt das Röhrchen in der Knickstelle. Wenn das Passivelement ein Gewicht ist, wird das Röhrchen in der Knickstelle bei Schwenken des Röhrchens aus der Vertikalen bewegt und z.B. beim Überkopfdrehen des Rückschlagventils geknickt. Dieses Röhrchen kann innen oder außen am Entlüftungsabschnitt festgeklemmt oder verrastet, z.B. angeschraubt oder mit einem Bajonettverschluß verriegelt sein. Alternativ kann das Röhrchen einteilig mit dem Entlüftungsabschnitt ausgebildet sein, z.B. als ein Spritzgußteil.

Generell sind Adapter, Gerüst und Verschlussteil sowie das optionale Röhrchen an dessen Entlüftungsabschnitt lösbar miteinander verbunden, insbesondere nicht verklebt. Dadurch hat das Rückschlagventil den Vorteil, dass es ohne Einsatz von Werkzeug lösbar und einfach reinigbar ist, und einzelne Bestandteile unabhängig voneinander austauschbar sind.

Die Figuren zeigen in
- Fig. 1 eine Querschnittsansicht einer Ausführungsform des Rückschlagventils,
- Fig. 2 eine Querschnittsansicht der in Fig. 1 gezeigten Ausführungsform in Explosionszeichnung,
- Fig. 3 eine Querschnittsansicht einer weiteren Ausführungsform des Rückschlagventils,
- Fig. 4 eine Querschnittsansicht der in Fig. 3 gezeigten Ausführungsform in Explosionsansicht,
- Fig. 5 eine Querschnittsansicht einer weiteren Ausführungsform des Rückschlagventils,
- Fig. 6 eine Querschnittsansicht der in Fig. 5 gezeigten Ausführungsform in Explosionsansicht und in
- Fig. 7 eine Ausführungsform des Rückschlagventils.

In den Figuren bezeichnen gleiche Bezugsziffern funktionsgleiche Elemente.

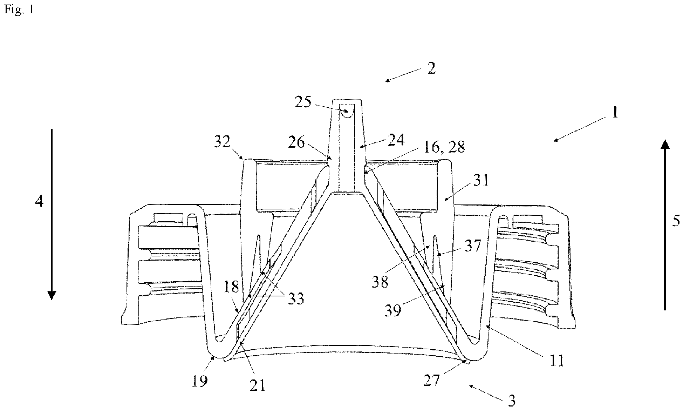

Fig. 1 zeigt eine Ausführungsform des Rückschlagventils 1 mit Einlassende 2 und entlang der gemeinsamen Längsachse gegenüberliegendem Auslassende 3, wobei die Richtung vom Einlassende 2 zum Auslassende 3 die Durchlassrichtung 4 ist und die entgegengesetzte Richtung die Sperrrichtung 5 ist. In Durchlassrichtung 4 sind entlang einer gemeinsamen Längsachse nacheinander ein Adapter 31, ein Gerüst 11 und ein Verschlussteil 21 angeordnet, wobei in Ruhestellung des Rückschlagventils 1 das Gerüst 11 an einer ersten Seite 18 von dem Adapter 31 kontaktiert wird und an einer zweiten Seite 19 von dem Verschlussteil 21 kontaktiert wird.

In der Mitte seines Querschnitts weist das zwischen dem Adapter 31 und dem Verschlussteil 21 angeordnete Gerüst 11 eine Öffnung 16 auf, durch die ein mit dem Verschlussteil 21 einstückig ausgebildeter Entlüftungsabschnitt 24 ragt. Dabei bildet das Verschlussteil 21 das Schließelement und der Entlüftungsabschnitt 24 die Entlüftungseinrichtung des Rückschlagventils 1. Das Verschlussteil 21 ist dadurch in der Öffnung 16 gehalten, dass es mit einem Bereich geringsten Außenquerschnitts 28 in der Öffnung 16 angeordnet ist, und in Richtung auf das Einlassende 2 eine Wulst 26 aufweist, neben der eine Hinterschneidung gebildet ist, wobei die Wulst 26 einen größeren Außenquerschnitt hat als der Querschnitt der Öffnung 16. Der Innenquerschnitt des Verschlussteils 21 ist gemäß Fig. 1 im Bereich des Entlüftungsabschnitts im Wesentlichen konstant und verjüngt sich nur in Richtung auf das Auslassende 2 im Bereich des Durchlasses 25. An seinem gegenüberliegenden, dem Auslassende 3 zugewandten Ende weist das Verschlussteil 21 eine Auskragung 27 auf, mit der es am Gerüst 11 anliegt und das Rückschlagventil 1 in Sperrrichtung abdichtet.

Der zweite Abschnitt 35 des Adapters 31 ist abschnittsweise mittels einer umlaufenden Nut 37 in einen inneren Abschnitt 38 und einen äußeren Abschnitt 39 unterteilt, wobei der Abstand entlang der gemeinsamen Längsachse zwischen einem ersten Ende 32 und einem zweiten Ende 33 des Adapters 31 im äußeren Abschnitt 39 größer ist als im inneren Abschnitt 38. Dadurch ist der Adapter 31 angepasst, mit seinem zweiten Ende 33 das Gerüst 11 sowohl im inneren Abschnitt 38 als auch im äußeren Abschnitt 39 zu kontaktieren und abzudichten.

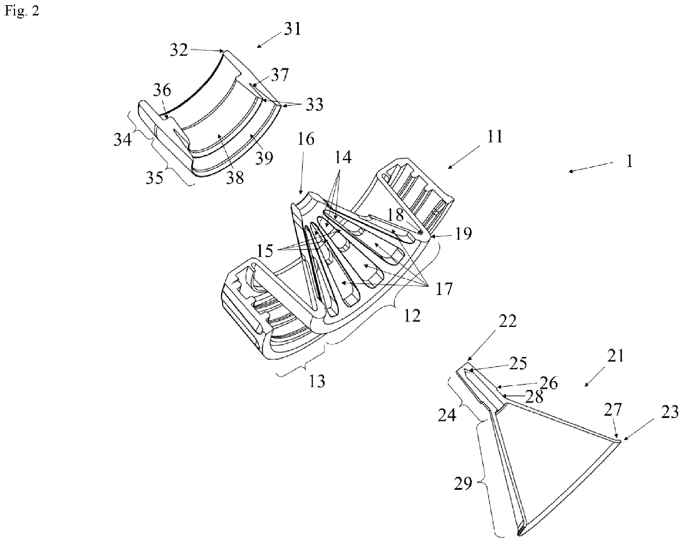

In Fig. 2 sind die Bestandteile des Rückschlagventils 1 detailliert gezeigt. Das Gerüst 11 ist in einem inneren Abschnitt 12 trichter- bzw. kegelförmig ausgebildet und weist Durchbrechungen 14 auf, die in Richtung auf die zentrale Öffnung 16 zulaufen und zwischen sich Streben 15 bilden. Durch die Streben 15 ist der innere Abschnitt 12 biegesteif.

In seinem äußeren Abschnitt 13 ist das Gerüst als Schraubdeckel mit innenliegendem Gewinde ausgeformt.

Das Gerüst weist im Bereich seiner Durchbrechungen 14 Anlagestege 17 auf, die sich jeweils nur über einen Abschnitt des Querschnitts der Durchbrechungen 14 erstrecken, und zwar nur über einen Teil der Dicke, d.h. des Abstands zwischen erster Seite 18 und zweiter Seite 19, des Gerüsts. In der hier gezeigten Ausführungsform erstrecken sich die Anlagestege ausgehend von Ebene der ersten Seite 18 bis etwa über die Hälfte der Dicke des Gerüsts 11. Im Bereich der zweiten Seite 19 des Gerüsts weisen die Ausnehmungen 14 daher einen größeren Querschnitt auf als im Bereich der ersten Seite 18. Der Übergang zwischen kleinerem und größerem Querschnitt der Durchbrechungen 14 kann, wie hier gezeigt, parallel zur ersten bzw. zweiten Seite 18, 19 verlaufen, oder kann z.B. angeschrägt sein.

Das Verschlussteil 21 weist in einem Trichterabschnitt 29 eine Form auf, die passend zur zweiten Seite 19 des Gerüsts 11 ist und gemäß Fig. 2 am zweiten Ende 23 des Verschlussteils 21 mit einer Auskragung 27 abschließt. In Richtung vom zweiten Ende 23 auf das erste Ende 22 verjüngt sich der Außenquerschnitt des Verschlussteils 21 zunächst kegelförmig bis in einen Bereich geringsten Querschnitts 28 und weitet sich danach zu einer Wulst 26 auf, deren Außenquerschnitt größer ist als der Querschnitt der Öffnung 16, und kann sich danach z.B. wieder in Richtung auf das erste Ende 22 verjüngen. Der Innenquerschnitt des Verschlussteils 21 verjüngt sich vom zweiten Ende 23 zum ersten Ende 22 zunächst trichterförmig im Bereich des Trichterabschnitts 29 und verläuft anschließend im Bereich des Entlüftungsabschnitts 24 mit im Wesentlichen konstantem Innenquerschnitt, wie hier als Option gezeigt, bevor sich der Innenquerschnitt zum Durchlass 25 verjüngt.

Der Trichterabschnitt 29 ist einstückig mit dem Entlüftungsabschnitt 24 ausgebildet, sodass das Verschlussteil 21 gleichzeitig als Entlüftungseinrichtung wirkt.

Der Adapter 31 ist, ausgehend von seinem ersten Ende 32 in Richtung auf sein zweites Ende 33, in einen ersten Abschnitt 34 und einen zweiten Abschnitt 35 unterteilt. Der zweite Abschnitt 35 weist einen geringeren Innenquerschnitt auf als der erste Abschnitt 34, wobei der Außenquerschnitt des Adapters im Wesentlichen konstant ist. Zwischen dem ersten und zweiten Abschnitt 34, 35 ist eine Auflagefläche 36 angeordnet, die parallel zur Querschnittsebene des Adapters 31 verläuft. In seinem zweiten Abschnitt 35 ist der Adapter 31 durch eine umlaufende Nut 37 in einen inneren Abschnitt 38 und einen äußeren Abschnitt 39 unterteilt, die am zweiten Ende 33 des Adapters einen inneren bzw. äußeren Ring bilden. Der Adapter 31 ist wie bevorzugt eingerichtet, das Gerüst 11 sowohl mit dem inneren Ring als auch mit dem äußeren Ring im Bereich der Anlagestege 17 zu kontaktieren und abzudichten.

In Ruhestellung des Rückschlagventils 1 liegt der Adapter 31 mit seinem zweiten Ende 33 an der ersten Seite 18 des Gerüsts 11 an und liegt das Verschlussstück 21 zumindest im Bereich der Auskragung 27 an der zweiten Seite 19 des Gerüsts 11 an, wobei der Entlüftungsabschnitt 24 zumindest abschnittsweise durch die Öffnung 16 des Gerüsts 11 hindurchragt. Wird am Einlassende 2 des Rückschlagventils 1 eine Flüssigkeit aufgegeben, so wird durch deren Gewichtskraft ein Druck auf den Trichterabschnitt 29 des Verschlussteils 21 in Richtung von dem Gerüst 11 weg ausgeübt. In der Folge klappt der Trichterabschnitt 29 von dem Gerüst 11 weg und ermöglicht ein Hindurchfließen der Flüssigkeit durch die Durchbrechungen 14 in Durchflussrichtung 4. Ein Herausrutschen des Verschlussteils 21 aus der Öffnung 16 des Gerüsts 11 wird durch die Wulst 26 verhindert. Wird in einem nachgeordneten Behälter durch die einströmende Flüssigkeit ein Überdruck aufgebaut, strömt gleichzeitig Luft durch den Entlüftungsabschnitt 24 und den Durchlass 25 in die entgegengesetzte Richtung, die die Sperrrichtung 5 des Rückschlagventils 1 ist. Nach dem Hindurchfließen der Flüssigkeit klappt der Trichterabschnitt 27 zurück in Richtung auf das Gerüst 11 und kontaktiert dieses.

Wird das Rückschlagventil 1 bzw. eine das Rückschlagventil 1 enthaltende Toilette gedreht, z.B. in eine Überkopfstellung, so übt die in dem nachgeordneten Behälter befindliche Flüssigkeit kraft ihres Gewichts einen Druck auf das Verschlussteil 21 in Sperrrichtung 5 aus. In der Folge wird das Verschlussteil 21 im Bereich seines Trichterabschnitts 29 an das Gerüst 11 angepresst und dichtet dessen inneren Abschnitt 12 ab, sodass keine Flüssigkeit hindurchlaufen kann. Durch den Durchlass 25 kann ebenfalls keine Flüssigkeit entweichen, da dieser für Flüssigkeiten undurchlässig ist. Im äußeren Abschnitt 13 verschließt das Gerüst den Behälter mittels eines Schraubverschlusses, sodass auch hier keine Flüssigkeit entweichen kann.

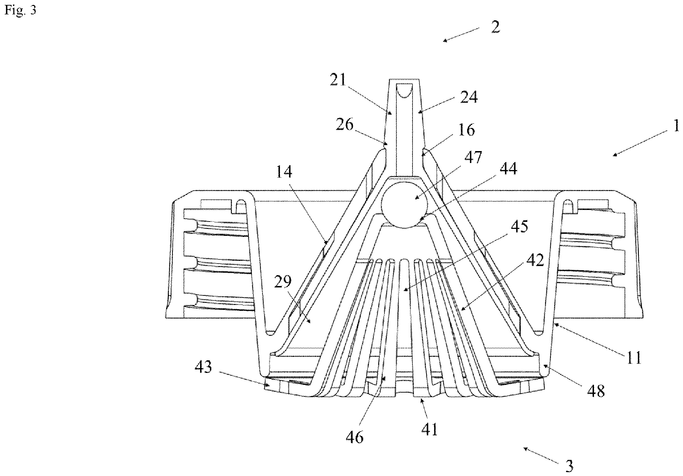

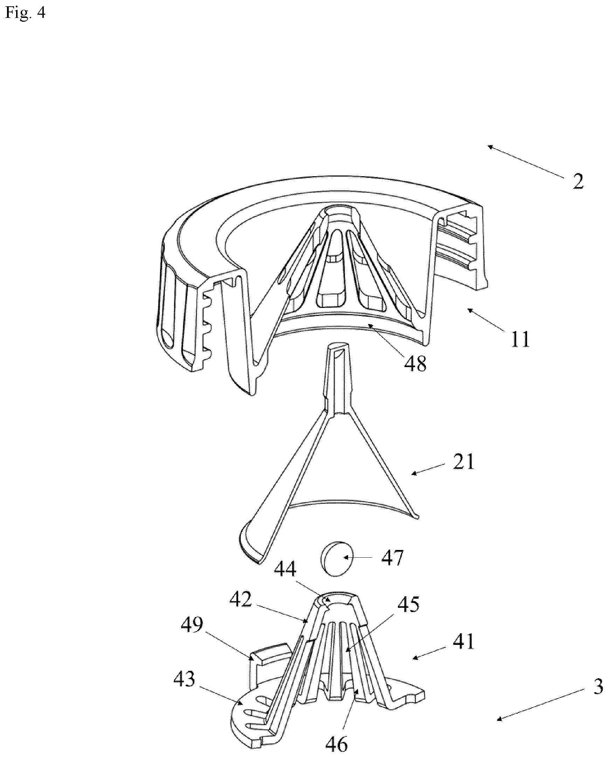

In der in Fig. 3 und 4 gezeigten Ausführungsform des Rückschlagventils 1 sind zwischen dem Einlassende 2 und dem Auslassende 3 entlang einer gemeinsamen Längsachse aneinander angrenzend ein Gerüst 11, ein Verschlussteil 21 eine Anschlagkugel als Verschlussstück 47 und ein Anschlag 41 angeordnet.

Der Anschlag 41 weist im Zentrum seines Querschnitts einen Kugelsitz als Öffnung 44 und in seinem trichterförmigen Abschnitt 42 mehrere Durchbrechungen 45 auf, die zwischen sich Streben 46 bilden. Durch die Streben 46 ist der trichterförmige Abschnitt 42 biegesteif. Die Durchbrechungen 45 erstrecken sich bis in den quer zur gemeinsamen Längsachse ausgebildeten äußeren Abschnitt 43 des Anschlags 41, sodass in der Stellung, in der das Verschlussteil 21 von dem Gerüst 11 weggeklappt ist und an dem Anschlag 41 anliegt, die Durchbrechungen 45 noch teilweise zugänglich sind und Flüssigkeit durch sie hindurchfließen kann. In der Öffnung 44 ist eine Anschlagkugel als Verschlussstück 47 angeordnet, die in der hier gezeigten Normal- bzw. Ruhestellung des Rückschlagventils 1 von dem Verschlussteil 21 beabstandet ist. Das Gerüst 11 weist einen umlaufenden Rand 48 auf, der sich in Richtung auf das Auslassende 3 erstreckt.

Wie in Fig. 3 gezeigt, weist der Anschlag 41 in seinem trichterförmigen Abschnitt 42 einen geringeren Öffnungswinkel auf als der Öffnungswinkel im inneren Abschnitt 12 des Gerüsts 11.

Fig. 4 zeigt einen Vorsprung 49, mittels dessen der Anschlag 41 mit dem Gerüst 11 verrastet werden kann. Dabei greift der Vorsprung 49 in gegenüberliegende passende Ausnehmungen in der Wand des Gerüsts 11 ein. In Fig. 3 ist der Anschlag 41 an dem Gerüst 11 festgelegt, sodass der Rand 48 den Anschlag 41 kontaktiert.

Wird am Einlassende 2 des Rückschlagventils 1 eine Flüssigkeit aufgegeben, so wird durch die Gewichtskraft der Flüssigkeit ein Druck auf den Trichterabschnitt 29 des Verschlussteils 21 in Richtung von dem Gerüst 11 weg ausgeübt. In der Folge klappt der Trichterabschnitt 29 von dem Gerüst 11 weg bis an den Anschlag 41 und ermöglicht ein Hindurchfließen der Flüssigkeit durch die Durchbrechungen 14, 45 in Richtung auf das Auslassende 3. Ein Herausrutschen des Verschlussteils 21 aus der Öffnung 16 des Gerüsts 11 wird durch die neben der Wulst 26 gebildete Hinterschneidung verhindert, mit der das Verschlussteil auf dem Gerüst 11 aufliegt. Selbst wenn des Verschlussteil 21 jedoch teilweise aus dem Gerüst 11 herausrutschen würde, würde es nur so weit herausrutschen, bis es auf die Anschlagkugel als Verschlussstück 47 trifft, wobei der Entlüftungsabschnitt 24 weiterhin durch die Öffnung 16 ragt.

Wird in einem nachgeordneten Behälter durch die einströmende Flüssigkeit ein Überdruck aufgebaut, strömt Luft durch den Entlüftungsabschnitt 24 in die entgegengesetzte Richtung. Nach dem Hindurchfließen der Flüssigkeit klappt der Trichterabschnitt 29 zurück in Richtung auf das Gerüst 11 und kontaktiert dieses.

Wird das Rückschlagventil 1 in eine Überkopfstellung gedreht, wird das als Anschlagkugel ausgebildete Verschlussstück 47 durch seine Schwerkraft aus der Öffnung 44 heraus in Richtung auf das Verschlussteil 21 bewegt, und verschließt dessen Entlüftungsabschnitt 24, sodass keine Flüssigkeit durch diesen in Richtung auf das Einlassende 2 hindurchdringen kann.

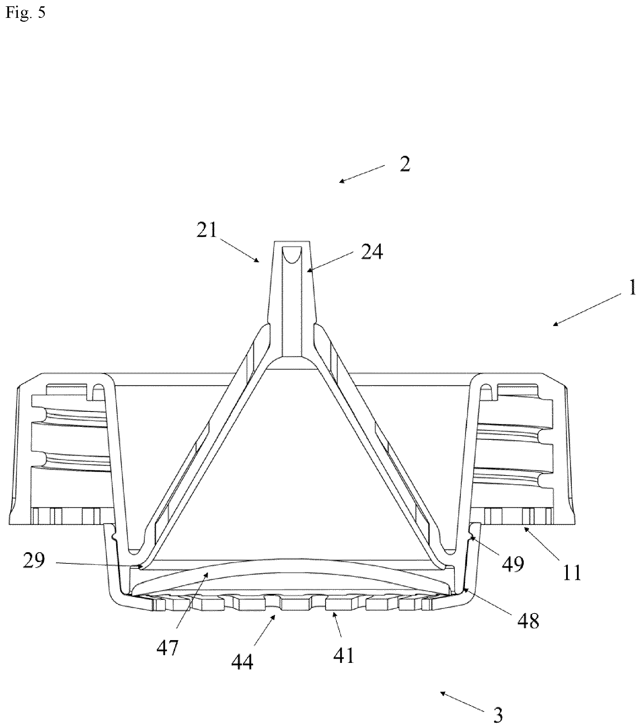

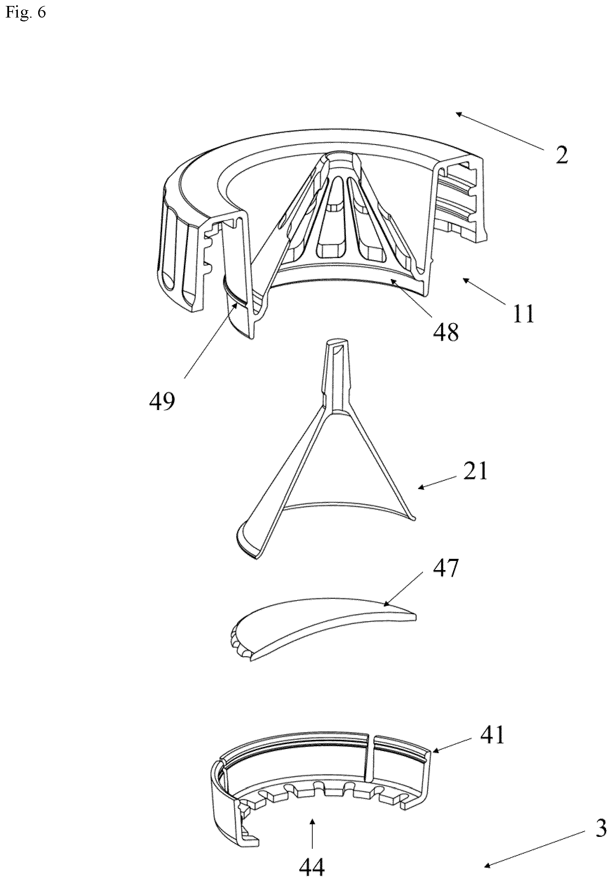

In der in Fig. 5 und 6 gezeigten Ausführungsform des Rückschlagventils 1 sind zwischen dem Einlassende 2 und dem Auslassende 3 entlang einer gemeinsamen Längsachse nacheinander ein Gerüst 11, ein Verschlussteil 21, ein Verschlussstück 47 und ein Anschlag 41 angeordnet.

Der Anschlag 41 weist im Zentrum seines Querschnitts eine Öffnung 44 und daran angrenzend Ausnehmungen auf, die sich zinnenförmig jeweils radial in der Wand des Anschlags 41 erstrecken. Der Anschlag 41 ist in einem äußeren Bereich 43 parallel zur gemeinsamen Längsachse ausgebildet und weist eine umlaufende Ausnehmung auf, in die ein im Rand 48 des Gerüsts 11 ausgebildeter umlaufender Vorsprung 49 eingreift. In Fig. 5 ist der Anschlag 41 mit dem Gerüst 11 verrastet, wobei der Rand 48 den Anschlag 41 kontaktiert.

Das Verschlussstück 47 ist als gebogene Platte ausgebildet, deren Durchmesser größer ist als der Durchmesser der Öffnung 44, jedoch kleiner als der Durchmesser des Anschlags 41. In der umlaufenden Außenkante des Verschlussstücks 47 sind Ausnehmungen zinnenförmig angeordnet, sodass in Normalstellung des Rückschlagventils 1 Flüssigkeit durch die zinnenförmigen Ausnehmungen in Verschlussstück 47 und Anschlag 41 in Richtung auf das Auslassende 3 fließen kann. Das von dem Gerüst 11 weggeklappte Verschlussteil 21 kann das Verschlussstück 47 kontaktieren, oder kann mit seiner Auskragung 29 in einem Abstand von dem Verschlussstück angeordnet sein.

Wird das Rückschlagventil 1 in eine Überkopfstellung gedreht, wird das als Kugelausschnitt ausgebildete Verschlussstück 47 durch seine Schwerkraft in Richtung auf das Verschlussteil 21 bewegt und kontaktiert dieses z.B. im Bereich der Auskragung 29, sodass der Entlüftungsabschnitt 24 verschlossen wird, sodass durch diesen keine Flüssigkeit in Richtung auf das Einlassende 2 strömen kann.

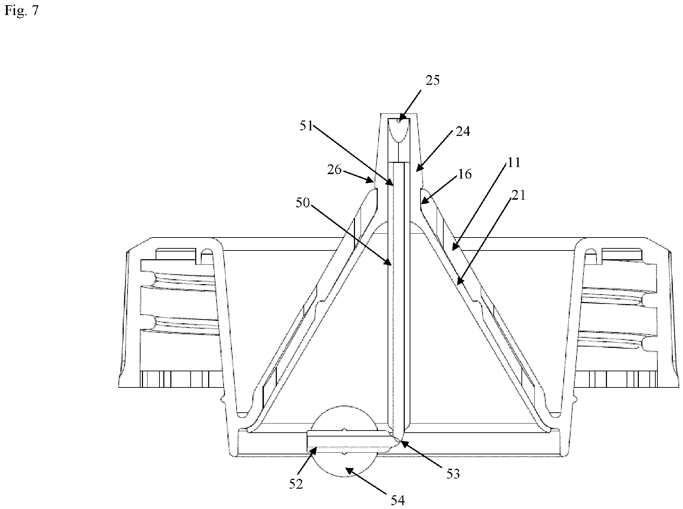

Fig. 7 zeigt ein Röhrchen 50, das sich durch das Verschlussteil 21 und das Gerüst 11 erstreckt. Das erste Ende 51 des Röhrchens 50 ist im Entlüftungsabschnitt 24 durch Klemmen festgelegt und dessen gegenüberliegendes zweites Ende 52 ragt im unbelasteten Zustand über das Verschlussteil 21 hinaus. Das Röhrchen 50 hat eine Knickstelle 53, die bevorzugt in dem Bereich der Ebene der endständigen Querschnittsöffnung 21o des Verschlussteils 21 oder außerhalb des Verschlussteils 21 liegt. Am zweiten Ende 52 des Röhrchens 50 ist ein Passivelement 54 angebracht, das in der Ausführung als Schwimmer bei Belastung durch Flüssigkeit aufschwimmt und das zweite Ende 52 des Röhrchens 50 um die Knickstelle 53 schwenkt und deren Innenquerschnitt verringert, bevorzugt schließt. Das Röhrchen 50 wirkt mit dem Schwimmer als Passivelement 54 daher in der Knickstelle 53 bei steigendem Flüssigkeitsspiegel unterhalb des Verschlussteils 21 als Verschlussstück für den Entlüftungsabschnitt 24.

Alternativ kann das Passivelement 54 ein Gewicht mit höherer Dichte als Wasser sein, so dass ein Schwenken des Röhrchens 50 aus der Vertikalen, z.B. beim Kippen des Rückschlagventils, den Innenquerschnitt in der Knickstelle 53 verringert.

### Bezugszeichen:

| | | | |
|---|---|---|---|
| 1 | Rückschlagventil | 33 | zweites Ende |
| 2 | Einlassende | 34 | erster Abschnitt |
| 3 | Auslassende | 35 | zweiter Abschnitt |
| 4 | Durchflussrichtung | 36 | Auflagefläche |
| 5 | Sperrrichtung | 37 | Nut |
| 11 | Gerüst | 38 | innerer Abschnitt |
| 12 | innerer Abschnitt | 39 | äußerer Abschnitt |
| 13 | äußerer Abschnitt | 41 | Anschlag |
| 14 | Durchbrechung | 42 | trichterförmiger Abschnitt |
| 15 | Strebe | 43 | äußerer Abschnitt |
| 16 | Öffnung | 44 | Öffnung |
| 17 | Anlagesteg | 45 | Durchbrechung |
| 18 | erste Seite | 46 | Strebe |
| 19 | zweite Seite | 47 | Verschlussstück |
| 21 | Verschlussteil | 48 | Rand |
| 21o | endständige Querschnittsöffnung | 49 | Vorsprung |
| 22 | erstes Ende | 50 | Röhrchen |
| 23 | zweites Ende | 51 | erstes Ende des Röhrchens |
| 24 | Entlüftungsabschnitt | 52 | zweites Ende des Röhrchens |
| 25 | Durchlass | 53 | Knickstelle |
| 26 | Wulst | 54 | Passivelement |
| 27 | Auskragung | | |
| 28 | Bereich geringsten Außenquerschnitts | | |
| 29 | Trichterabschnitt | | |
| 31 | Adapter | | |
| 32 | erstes Ende | | |

## Patentansprüche

1. Rückschlagventil (1) zur Verwendung an einer Toilette, das zwischen einem Einlassende (2) und einem gegenüberliegenden Auslassende (3) entlang einer gemeinsamen Längsachse in dieser Reihenfolge
- einen von einem starren Gerüst (11) gebildeten Dichtungssitz und
- ein von einem elastischen Verschlussteil (21) gebildetes Schließelement aufweist, wobei Gerüst (11) und Verschlussteil (21) im Bereich des Dichtungssitzes zueinander passend trichterförmig in Richtung auf das Einlassende (2) zulaufend ausgebildet sind und das Verschlussteil (21) in einer Ruhestellung des Rückschlagventils (1) im Bereich des Dichtungssitzes gegen das Gerüst (11) gespannt und in diesem gehaltert ist, wobei das Gerüst (11) im Bereich des Dichtungssitzes Durchbrechungen (14) aufweist und das Schließelement einstückig mit einer Entlüftungseinrichtung ausgebildet ist, wobei die Entlüftungseinrichtung dadurch gebildet ist, dass das Verschlussteil (21) mit einem Entlüftungsabschnitt (24) abschnittsweise durch eine Öffnung (16) des Gerüsts (11) ragt und in Richtung auf das Einlassende (2) in einem Abstand von dem Gerüst (11) einen Durchlass (25) aufweist.

2. Rückschlagventil (1) nach Anspruch 1, **dadurch gekennzeichnet, dass** das Verschlussteil (21) dadurch an dem Gerüst (11) gehaltert ist, dass es mittels einer neben einer Wulst (26) gebildeten Hinterschneidung in dem Bereich, der durch die Öffnung (16) des Gerüsts (11) ragt, auf dem Gerüst (11) aufliegt und mit diesem verklemmt ist.

3. Rückschlagventil (1) nach einem der voranstehenden Ansprüche, **dadurch gekennzeichnet, dass** der Durchlass (25) von einem Rückschlagverschluss gebildet ist.

4. Rückschlagventil (1) nach einem der voranstehenden Ansprüche, **dadurch gekennzeichnet, dass** das Verschlussteil (21) eingerichtet ist, dass es bereits bei einem Druck öffnet, der einer Füllhöhe von Flüssigkeit am Einlassende (2) des Rückschlagventils (1) entspricht, bei der der Entlüftungsabschnitt (24) des Verschlussteils (21) abschnittsweise über die Füllhöhe hinausragt.

5. Rückschlagventil (1) nach einem der voranstehenden Ansprüche, **gekennzeichnet durch** einen elastischen Adapter (31), der ein erstes Ende (32) und ein entlang der gemeinsamen Längsachse gegenüberliegendes zweites Ende (33) aufweist, wobei der Adapter (31) mit seinem ersten Ende (32) angrenzend an das Einlassende (2) des Rückschlagventils (1) angeordnet ist und mit dem zweiten Ende (33) angrenzend an das Gerüst (11) angeordnet ist.

6. Rückschlagventil (1) nach Anspruch 5, **dadurch gekennzeichnet, dass** der Adapter (31) ausgehend von seinem ersten Ende (32) einen ersten Abschnitt (34) mit größerem Innenquerschnitt und angrenzend daran einen zweiten Abschnitt (35) mit geringerem Innenquerschnitt aufweist, wobei zwischen dem ersten und dem zweiten Abschnitt (34, 35) eine umlaufende Auflagefläche (36) angeordnet ist, die quer zur gemeinsamen Längsachse verläuft.

7. Rückschlagventil (1) nach einem der Ansprüche 5 bis 6, **dadurch gekennzeichnet, dass** der Adapter (31) in seinem zweiten Abschnitt (35) eine umlaufende Nut (37) aufweist, durch die der Adapter (31) in einen inneren Abschnitt (38) und einen äußeren Abschnitt (39) abteilt wird, deren Enden gegeneinander beweglich sind.

8. Rückschlagventil (1) nach einem der voranstehenden Ansprüche, **dadurch gekennzeichnet, dass** das Gerüst (11) an einer ersten Seite (18) Anlagestege (17) aufweist, die sich über einen Anteil der Dicke des Gerüsts (11) erstrecken.

9. Rückschlagventil nach einem der voranstehenden Ansprüche, **dadurch gekennzeichnet, dass** das Gerüst in einem äußeren Abschnitt (13) seines Querschnitts als Verschluss ausgeformt ist, bevorzugt mit innenliegend eingeformtem Schraubgewinde.

10. Rückschlagventil (1) nach einem der voranstehenden Ansprüche, **dadurch gekennzeichnet, dass** es zusätzlich zwischen dem Verschlussteil (21) und dem Auslassende (3) einen mit dem Gerüst (11) verrastbaren Anschlag (41) und ein zwischen dem Anschlag (41) und dem Verschlussteil (21) angeordnetes Verschlussstück (47) aufweist,
wobei der Anschlag (41) im Zentrum seines Querschnitts eine Öffnung (44) aufweist und eingerichtet ist, das Verschlussstück (47) zu halten und in einer Normalstellung des Rückschlagventils (1) ein Hindurchfließen von Flüssigkeit in Richtung auf das Auslassende (3) zu erlauben,
wobei das Verschlussstück (47) einen Durchmesser aufweist, der größer als die Öffnung (44) und kleiner als der Durchmesser des Anschlags (41) ist, und das Verschlussstück (47) eingerichtet ist, in der Normalstellung des Rückschlagventils (1) eine Entlüftung durch die Entlüftungseinrichtung zu erlauben und in einer Überkopfstellung des Rückschlagventils (1) die Entlüftungseinrichtung zu verschließen.

11. Rückschlagventil (1) nach einem der voranstehenden Ansprüche, **dadurch gekennzeichnet, dass** es aus einem Adapter (31), dem Gerüst (11), dem Verschlussteil (21), einem Verschlussstück (47) und einem Anschlag (41) besteht.

12. Rückschlagventil (1) nach einem der voranstehenden Ansprüche, **gekennzeichnet durch** ein mit seinem ersten Ende (51) am Entlüftungsabschnitt (24) angeschlossenes Röhrchen (50), das sich durch das Verschlussteil (21) erstreckt und dessen dem ersten Ende (51) gegenüberliegendes zweites Ende (52) ein Passivelement (54) aufweist, mit einer Knickstelle (53) des Röhrchens (50) zwischen seinem ersten Ende (51) und dem Passivelement (54).

13. Rückschlagventil (1) nach Anspruch 12, **dadurch gekennzeichnet, dass** die Knickstelle (53) in der Ebene der endständigen Querschnittsöffnung des Verschlussteils (21) gegenüber dem Entlüftungsabschnitt (24) liegt.

14. Rückschlagventil (1) nach einem der Ansprüche 12 bis 13, **dadurch gekennzeichnet, dass** das Passivelement (54) ein Schwimmer ist oder ein Gewicht mit höherer Dichte als Wasser.

15. Trenntoilette, die ein Rückschlagventil nach einem der voranstehenden Ansprüche aufweist.

## Claims

1. Non-return valve (1) for use on a toilet, which is arranged between an inlet end (2) and an opposite outlet end (3) along a common longitudinal axis in this order
- a seal seat formed by a rigid frame (11) and
- a sealing element formed by an elasticated closure part (21)
wherein the frame (11) and the closure part (21) in the region of the seal seat are formed matching in a funnel shape running towards the inlet end (2) and the closure part (21) is loaded against the frame (11) in the region of the seal seat in a resting position of the non-return valve (1) and is held therein, wherein the frame (11) has openings (14) in the region of the seal seat and the sealing element is formed in one piece with a venting device, wherein the venting device is formed by the closure part (21) with a venting section (24) projecting in sections through an opening (16) of the frame (11) and at a distance from the frame (11) having a passage (25) in the direction of the inlet end (2).

2. Non-return valve (1) according to claim 1, **characterised in that** the closure part (21) is held on the frame (11) **in that** it rests on the frame (11) by means of an undercut formed next to a bead (26) in the region which projects through the opening (16) of the frame (11) and is clamped to the latter.

3. Non-return valve (1) according to one of the preceding claims, **characterised in that** the passage (25) is formed by a non-return closure.

4. Non-return valve (1) according to one of the preceding claims, **characterised in that** the closure part (21) is set up so that it already opens at a pressure which corresponds to a filling level of liquid at the inlet end (2) of the non-return valve (1), at which the venting section (24) of the closure part (21) in sections projects above the filling level.

5. Non-return valve (1) according to one of the preceding claims, **characterised by** a resilient adapter (31) having a first end (32) and a second end (33) opposite along the common longitudinal axis, wherein the adapter (31) is arranged with its first end (32) adjacent to the inlet end (2) of the non-return valve (1) and is arranged with the second end (33) adjacent to the frame (11).

6. Non-return valve (1) according to claim 5, **characterised in that** the adapter (31), starting from its first end (32), has a first section (34) with a larger internal cross-section and, adjacent thereto, a second section (35) with a smaller internal cross-section, a circumferential bearing surface (36) being arranged between the first and second sections (34, 35), which bearing surface extends transversely to the common longitudinal axis.

7. Non-return valve (1) according to one of claims 5 to 6, **characterised in that** the adapter (31) has a circumferential groove (37) in its second section (35), by means of which the adapter (31) is divided into an inner section (38) and an outer section (39), the ends of which are movable relative to one another.

8. Non-return valve (1) according to one of the preceding claims, **characterised in that** the frame (11) has contact webs (17) on a first side (18), which extend over a portion of the thickness of the frame (11).

9. Non-return valve according to one of the preceding claims, **characterised in that** the frame in an outer section (13) of its cross-section is formed as a closure, preferably with an internally formed screw thread.

10. Non-return valve (1) according to one of the preceding claims, **characterised in that** it additionally has a stop (41), which can be latched to the frame (11), between the closure part (21) and the outlet end (3) and a closure piece (47) arranged between the stop (41) and the closure part (21),
wherein the stop (41) in the centre of its cross-section has an opening (44) and is arranged to hold the closure piece (47) and, in a normal position of the non-return valve (1), to allow liquid to flow through in the direction of the outlet end (3), wherein the closure piece (47) has a diameter which is larger than the opening (44) and smaller than the diameter of the stop (41), and the closure piece (47) is designed to allow venting through the venting device in the normal position of the non-return valve (1) and to close the venting device in an overhead position of the non-return valve (1).

11. Non-return valve (1) according to one of the preceding claims, **characterised in that** it consists of an adapter (31), the frame (11), the closure part (21), a closure piece (47) and a stop (41).

12. Non-return valve (1) according to one of the preceding claims, **characterised by** a tube (50) connected by its first end (51) to the venting section (24), which extends through the closure part (21) and whose second end (52) opposite the first end (51) has a passive element (54), with a kink (53) of the tube (50) between its first end (51) and the passive element (54).

13. Non-return valve (1) according to claim 12, **characterised in that** the kink (53) lies in the plane of the terminal cross-sectional opening of the closure part (21) opposite the venting section (24).

14. Non-return valve (1) according to any one of claims 12 to 13, **characterised in that** the passive element (54) is a float or a weight with a higher density than water.

15. Separating toilet comprising a non-return valve according to one of the preceding claims.

## Revendications

1. Clapet anti-retour (1) destiné à être utilisé sur des toilettes, qui est monté entre une extrémité d'entrée (2) et une extrémité de sortie opposée (3) le long d'un axe longitudinal commun, dans cet ordre
- un siège d'étanchéité formé par une échafaudage rigide (11) et
- un élément de fermeture formé par un élément d'obturation (21),
l'échafaudage (11) et l'élément d'obturation (21) étant réalisés dans la zone du siège d'étanchéité en forme d'entonnoir s'adaptant l'un à l'autre en direction de l'extrémité d'entrée (2) et l'élément d'obturation (21) étant serré contre l'échafaudage (11) dans une position de repos du clapet anti-retour (1) dans la zone du siège d'étanchéité et étant maintenu dans celle-ci, l'échafaudage (11) présentant des ajours (14) dans la zone du siège d'étanchéité et l'élément de fermeture étant réalisé d'une seule pièce avec un dispositif de purge d'air, dans lequel le dispositif de purge d'air est formé par le fait que l'élément d'obturation (21) fait saillie par une section de purge d'air (24) par sections à travers une ouverture (16) de l'échafaudage (11) et présente un passage (25) en direction de l'extrémité d'entrée (2) à une certaine distance de l'échafaudage (11).

2. Clapet anti-retour (1) selon la revendication 1, **caractérisé en ce que** l'élément d'obturation (21) est maintenue sur l'échafaudage (11) par le fait qu'elle repose sur l'échafaudage (11) au moyen d'une contre-dépouille formée à côté d'un bourrelet (26) dans la zone qui fait saillie à travers l'ouverture (16) de l'échafaudage (11) et qu'elle est bloquée avec celle-ci.

3. Clapet anti-retour (1) selon l'une des revendications précédentes, **caractérisé en ce que** le passage (25) est formé par un obturateur anti-retour.

4. Clapet anti-retour (1) selon l'une des revendications précédentes, caractérisé en ce l'élément d'obturation (21) est agencée pour s'ouvrir déjà à une pression qui correspond à une hauteur de remplissage de liquide à l'extrémité d'entrée (2) du clapet anti-retour (1), à laquelle la section de purge d'air (24) de l'élément d'obturation (21) dépasse par sections la hauteur de remplissage.

5. Clapet anti-retour (1) selon l'une des revendications précédentes, **caractérisé par** un adaptateur élastique (31) qui présente une première extrémité (32) et une deuxième extrémité (33) opposée le long de l'axe longitudinal commun, l'adaptateur (31) étant disposé avec sa première extrémité (32) adjacente à l'extrémité d'entrée (2) du clapet anti-retour (1) et étant disposé avec la deuxième extrémité (33) adjacente à l'échafaudage (11).

6. Clapet anti-retour (1) selon la revendication 5, **caractérisé en ce que** l'adaptateur (31) présente, à partir de sa première extrémité (32), une première section (34) de section intérieure plus grande et, adjacente à celle-ci, une deuxième section (35) de section intérieure plus petite, une surface d'appui périphérique (36) étant disposée entre la première et la deuxième section (34, 35), laquelle s'étend transversalement à l'axe longitudinal commun.

7. Clapet anti-retour (1) selon l'une quelconque des revendications 5 à 6, **caractérisé en ce que** l'adaptateur (31) comporte dans sa deuxième partie (35) une rainure périphérique (37) permettant de diviser l'adaptateur (31) en une partie intérieure (38) et une partie extérieure (39) dont les extrémités sont mobiles l'une par rapport à l'autre.

8. Clapet anti-retour (1) selon l'une quelconque des revendications précédentes, **caractérisé en ce que** l'échafaudage (11) comporte sur un premier côté (18) des nervures d'appui (17) qui s'étendent sur une fraction de l'épaisseur de l'échafaudage (11).

9. Clapet anti-retour selon l'une des revendications précédentes, **caractérisé en ce que** l'échafaudage est formée dans une partie extérieure (13) de sa section transversale en tant que fermeture, de préférence avec un filet de vis formé à l'intérieur.

10. Clapet anti-retour (1) selon l'une des revendications précédentes, **caractérisé en ce qu'**il comporte en outre, entre l'élément d'obturation (21) et l'extrémité de sortie (3), une butée (41) pouvant être enclenchée avec l'échafaudage (11) et une pièce d'obturation (47) disposée entre la butée (41) et l'élément d'obturation (21),
dans lequel la butée (41) présente une ouverture (44) au centre de sa section transversale et est agencée pour maintenir la pièce d'obturation (47) et, dans une position normale du clapet anti-retour (1), pour permettre au liquide de s'écouler à travers celui-ci en direction de l'extrémité de sortie (3),
dans lequel la pièce d'obturation (47) présente un diamètre qui est plus grand que l'ouverture (44) et plus petit que le diamètre de la butée (41), et la pièce d'obturation (47) est adaptée pour permettre, dans la position normale du clapet anti-retour (1), une purge à travers le dispositif de purge d'air et pour fermer le dispositif de purge d'air dans une position renversée du clapet anti-retour (1).

11. Clapet anti-retour (1) selon l'une des revendications précédentes, **caractérisé en ce qu'**il est constitué du adaptateur (31), de l'échafaudage (11), de l'élément d'obturation (21), d'une pièce d'obturation (47) et d'une butée (41).

12. Clapet anti-retour (1) selon l'une des revendications précédentes, **caractérisé par** un petit tube (50) raccordé par sa première extrémité (51) à la section de purge d'air (24), qui s'étend à travers l'élément d'obturation (21) et dont la deuxième extrémité (52) opposée à la première extrémité (51) présente un élément passif (54), avec un point de pliage (53) du petit tube (50) entre sa première extrémité (51) et l'élément passif (54).

13. Clapet anti-retour (1) selon la revendication 12, **caractérisé en ce que** le point de pliage (53) est situé dans le plan de l'ouverture de section transversale d'extrémité de l'élément d'obturation (21), à l'opposé de la section de purge d'air (24).

14. Clapet anti-retour (1) selon l'une des revendications 12 à 13, **caractérisé en ce que** l'élément passif (54) est un flotteur ou un poids de densité supérieure à celle de l'eau.

15. Toilette à séparation comprenant un clapet anti-retour selon l'une des revendications précédentes.
